Europäisches Patentamt

European Patent Office

Office européen des brevets

(11) Publication number: **0 376 604**
**A2**

## EUROPEAN PATENT APPLICATION

(21) Application number: 89313342.1

(51) Int. Cl.5: **G01P 3/488**

(22) Date of filing: 20.12.89

(30) Priority: 27.12.88 US 289844

(43) Date of publication of application:
04.07.90 Bulletin 90/27

(84) Designated Contracting States:
AT BE CH DE ES FR GB GR IT LI LU NL SE

(71) Applicant: AMETEK AEROSPACE PRODUCTS, INC.
410, Park Avenue
New York New York 10022(US)

(72) Inventor: Glasheen, William Michael
21, Al Street
Derry New Hampshire(US)

(74) Representative: Dixon, Donald Cossar et al
Gee & Co. Chancery House Chancery Lane
London WC2A 1QU(GB)

(54) Speed sensor with magnetic field switching for actuating a magneto-optic switch means.

(57) A speed sensor (10) for a rotating member (19) utilizes a magneto-optic switch (17) and a high energy rare-earth permanent magnet (11) mounted in the vicinity of the rotating member (19). The magnetic field from the magnet (11) is selectively switched between a pair of orthogonally oriented magnetic flux return paths (12). The magnetic field is switched between the flux return paths (12), to actuate magneto-optic switch means (17) located in one of the paths, whenever a ferromagnetic tooth (18) on the rotating member (19) passes by the magnet.

*Fig. 1*

# SPEED SENSOR WITH MAGNETIC FIELD SWITCHING FOR ACTUATING A MAGNETO-OPTIC SWITCH MEANS

This invention relates to a speed sensor, and, more particularly, to a speed sensor including a magneto-optic switch.

Speed sensors for a variety of uses including aircraft applications routinely use electromagnetic, variable reluctance techniques. While such systems are widely used and well-known they are bulky because of the need for a winding in which a voltage is induced by the time varying flux occasioned by the change in reluctance. There is a need for speed sensors which are substantially smaller and less expensive than the electromagnetic, variable reluctance schemes described above. Applicant has discovered an approach to measuring speed through a combination of a variable reluctance magnetic path and a magneto-optic transduction technique in which a ferromagnetic tooth on the rotating member actuates a magneto-optic switch. The use of a magneto-optic switch in conjunction with, a high energy, rare-earth permanent magnet results in a compact and very effective speed sensor.

A recently filed application (S.N. 117,174 filed November 5, 1987) entitled "Monolithic Faraday Optical Switch", assigned to the General Electric Company, the Assignee of the instant invention, describes a monolithic Faraday magneto-optic switch in which all of the switch functional elements; viz, polarizers, analyzers, Faraday rotator layers, light reflecting surfaces, are located on a single substrate. Radiant energy from an input optical fiber is transmitted through a polarizer element deposited on one surface of the substrate and through Faraday rotational layers deposited on the substrate and to a reflecting element on the other surface. Radiation is reflected back to an analyzer positioned adjacent to the polarizer on the first surface. The Faraday layer when subjected to a magnetic field which is orthogonal to the surface, rotates the plane of polarization of the incident radiation. The presence or absence of the magnetic field thus controls the optical switching function.

A monolithic magneto-optic switch element of this sort is actuated when a ferromagnetic tooth on a rotating member passes by the magnet. Two (2) magnetic return paths are associated with the magnet. The magnetic field is selectively switched between these return paths by the passage of the ferromagnetic tooth on the rotating member. A magneto-optic switch means is associated with one of the magnetic return paths so that switching of the magnetic field to that path actuates the switch.

It is therefore, a principal objective of the invention to provide a speed sensor utilizing a Faraday magneto-optic transducing arrangement.

It is a further objective of the invention to produce a small, light weight speed sensor utilizing a magneto-optic switch means.

Yet another objective of the invention is to provide a speed sensor, in which the magnetic field return path is switched to actuate a magneto-optic switching means.

Other objectives and advantages of the invention will become apparent as the description thereof proceeds.

The various objectives and advantages of the invention are realized in a speed sensor which includes a high energy, rare-earth permanent magnet mounted to come into flux exchange relationship with a ferromagnetic tooth on a rotating member. A pair of orthogonally oriented flux return paths are associated with the magnet. In the absence of a ferromagnetic tooth the magnetic field passes through one of the flux return paths. As the tooth passes the magnet, the magnetic field passes through the tooth and is switched to the other return path, perpendicular to the first path, which has a magneto-optic switch means associated therewith. This actuates the switch, allowing passage of radiant energy through the switch and producing an output signal each time the ferrous tooth on the rotating member passes the speed sensor.

Figure 1 is a perspective view of the speed sensor mounted adjacent to a rotating member and illustrates the magnet, magneto-optic switch, and orthogonal magnetic field return paths.

Figure 2 is a perspective view of the monolithic Faraday magneto-optic switch utilized to produce a switching function.

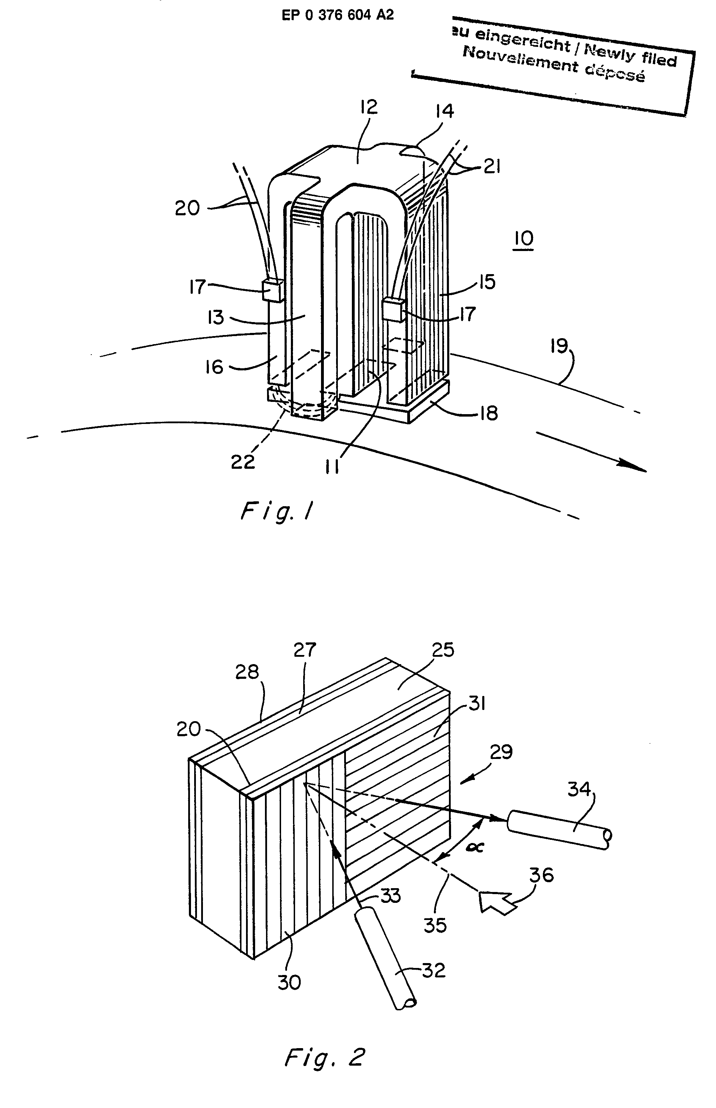

Figure 1 is an exemplary illustration of a speed sensor according to the invention which includes a magneto-optic which interacts with a high energy magnet to measure the speed of a rotating member. The rotating member includes a ferromagnetic tooth or projection which upon passing the magnet switches magnetic flux between a pair of orthogonally oriented magnetic flux return paths. Magneto-optic switch means is associated with the return path which receives the magnetic field when the tooth passes the magnet to produce an output signal during each rotation.

The speed sensor shown generally at 10 includes high energy, rare-earth magnet 11 preferably of samarium cobalt which may for example, be in the form of sintered samarium cobalt supported in a non-magnetic stainless steel cylinder with the cylinder being attached to the magnetic return paths 12 by means of an epoxy adhesive. Rare-earth magnets of this type are characterized by a very high coercive force thereby eliminating accidental magnetic "knock-down" of the magnet and high residual magnetic fields in the order of 1500-2000 gauss. First and second magnetic return path means 13-14 and 15-16 are positioned on opposite sides of magnet 11. The individual return paths are perpendicular to each other and parallel to magnet 11. The orthogonal orientation of the magnetic field paths lends itself readily to magnetic flux switching between the return paths. Path 15-16 has magneto-optic switches 17 associated therewith so that switching of the magnetic field to return path 15-16 as ferromagnetic tooth 18 projecting from rotating member 19 passes magnet 11 actuates the switches.

Magneto-optic switches 17, as will be described in detail later in connection with the detail showing of Figure 2, are of a monolithic construction in that all of the functional elements of the magneto-optic switch are located on a single substrate. That is, polarizer, analyzer, Faraday rotator, and reflector elements are deposited on a single substrate thereby producing an extremely small and efficient magneto-optic switch. Optical fiber pairs 20 and 21 are in contact with the polarizer and analyzer elements of magneto-optic switches 17. The entire arrangement may be positioned inside of a non-magnetic housing, not shown, with the optical fibers being brought into such a housing through an optical connector of known configuration. Each of the magneto-optic switches responds to a magnetic field along its sensitive axis with the magnetic field rotating the plane of polarization of the incident radiation as it passes through the Faraday rotator layers in the switch. Thus, when the magnetic field is switched to magnetic return path 15-16 switches 17 are actuated so that radiant energy from an input fiber in the pair passes through the switch to the output fiber and is then transmitted to a remote detector and signal processing circuitry to produce an output signal each time the ferrous tooth on the rotating member passes by the sensor.

Ferrous tooth 18 is narrower than the width of and is centered on rotating member 19 to pass directly under the magnet and flux return path elements 15 and 16 during each rotation. Tooth 18 is elongated and is longer than the spacing between return path elements 15 and 16. The spacing between return path elements 13 and 14, on the other hand is greater than the width of tooth 18. Consequently, when the tooth passes beneath the sensor there is an air gap between the edge of the tooth and field return member 13 and 14. Orthogonal flux return path elements 15 and 16 are, however, located over the tooth so that there is only a small air gap between the face of magnetic flux return members and the tooth surface so that (as shown by the dashed lines 22) the magnetic field passes through the tooth and to return paths elements 15 and 16 to actuate the magneto-optic switch members. In the absence of the tooth, the distance between return paths elements 13 and 14 and magnet 11 is less than the distance between return paths elements 15 and 16 and magnet 11. Thus in the absence of a tooth the air gap between the magnet and field return path 15 and 16 is greater than the air gap between elements 13 and 14 so that the flux returns to the magnet via flux return path elements 13 and 14. As pointed out above, with the presence of a tooth however, the air gap and the reluctance of the path between the magnet and members 13 and 14 is much larger than the reluctance of the path between flux return elements 15 and 16 thereby switching flux path from one return path the other actuating the magneto-optic switches. The speed sensor of Figure 1 shows a redundant system with two (2) speed sensors 17 located in each leg of the flux return path 15-16. The invention, however, is not limited to redundant magneto-optic switches since the invention may readily be carried out using but a single magneto-optic switch.

Figure 2 illustrates, the construction of the monolithic magneto-optic switches 17 utilized in the speed sensor of Figure 1. The monolithic magneto-optic switch shown in Figure 2 is the basis of the aforementioned application S.N. 117,174, filed in the name of the instant inventor. The monolithic magneto-optic switch of Figure 2 includes an optically inactive substrate 25 which is preferably a single crystal substrate of gadolinium, gallium, garnet, though other mixed crystals garnet substrates may be used with equal effectiveness. The term "optically inactive" is used in the sense that the substrate is transparent plane polarized energy but does not affect the plane of polarization. Positioned on opposite sides of the substrate 25 of Faraday rotator layers 26 and 27. The rotator layers are preferably bismuth doped gadolinium, iron, garnet which are grown on the substrate by liquid phase epitaxy so that the rotator layers have the same crystalline orientation as the substrate. Layers 26 and 27 are Faraday rotators in the sense that the plane of polarization of radiant energy passing through such a layer in a direction parallel to a magnetic field, is rotated by an amount dependent on the Verdet constant ($^\circ$ unit thickness) of the material and on the thickness of layer. The Verdet constant of bismuth doped gadolinium iron garnet is very high. Materials having angular rotations of one (1°) per micron at a magnetic field strength of 203 gauss at a wave length of 850 nanometers are commercially available. Consequently, a 90° rotation of the incident plane polarized radiation can be achieved with a rotator thickness of about 90 microns.

A non-magnetic light or radiation reflecting layer 28 (of silver or aluminum for example) is deposited over Faraday rotator layer 27. Deposited on the front surface of the substrate over rotator layer 26 is a polarizer/analyzer elements mounted in a side-by-side configuration. Polarizer/analyzer pair 29 thus consists of polarizer 30 shown as a vertical polarizer so that only vertically plane polarized components of the incident unpolarized energy passes through the polarizer. Analyzer element 31 positioned adjacent to polarizer is oriented to permit passage of horizontally polarized components. Polarizer and analyzer elements 30 and 31 are deposited over rotator layer 26 by any one of a number of well-known techniques.

The Faraday magneto-optic switch is illuminated by a beam of radiant energy, with the term "radiant energy" being used in its broadest sense to include electromagnetic energy both in and outside of the visible spectrum. The radiant energy, from a remote source not shown, which illuminates polarizer 30 comes from an input optical fiber 32. Input fiber 32 is positioned to illuminate polarizer element 30 with radiation illustrated by the arrow 33. Input fiber 32 as well as output fiber 34 positioned adjacent to analyzer 31 are both displaced from a normal or orthogonal axis 35, which axis represents both the optical axis as well as the axis of the applied magnetic field 36, by an angle a.

Input and output fibers 32 and 34 are positioned directly against polarizer 30 and analyzer 31 and attached thereto by an adhesive or by retaining the optical fiber ends in a ferrule which is positioned against the polarizer/analyzer elements. The input and output optical fibers are typically one hundred micron (100m) core diameter optical fibers surrounded with the customary reflective and cladding layers.

Vertically plane polarized energy exiting from polarizer 30 passes through Faraday rotator layer 26, substrate 25, and Faraday layer 27. After passing through layer 27 the light is reflected back from reflecting layer 28 through the rotator layers and the substrate to analyzer 31. Plane polarizer radiation which is rotated by 90° as shown by the arrow 37 passes through analyzer 31 and thence to output fiber 34 and is transmitted to a remotely located detector and signal processing electronics to produce output pulses which are an indication of the condition represented by the presence of the magnetic field. Passage of the ferrous tooth and switching of the magnetic field between the orthogonally oriented flux return paths in the sensor generates output pulses the pulse repetition frequency of which is a measure of the speed of a rotating member.

If rotation of the plane of polarization is less than 90° only a portion of the incident radiation is horizontally polarized and only a portion of the incident energy passes through analyzer 31. In the absence of any magnetic field, the degree of rotation is 0° or very close to 0° so that virtually all of the reflected vertically polarized radiation is blocked by analyzer 31. In the presence of a magnetic field, the incident radiation is rotated so that some of the radiation which illuminates the back of analyzer 31 is now horizontally polarized and all or a substantial portion (depending on the degree of rotation) passes through to analyzer 31 and is received by output optical fiber 34.

Optically inactive crystalline substrates of gadolinium, gallium, garnet, having Faraday rotator layers of bismuth doped, gadolinium iron garnet deposited on the surface are commercially available. For example, such substrates are available from the Airtron Division of Litton Industries, 200 E. Hanover Avenue, Morris Plains, New Jersey 07950 under the trade designation LLC 120. The LLC 120 substrate/rotator is approximately 0.5mm thick and has 21.7 micron layers of bismuth doped gadolinium iron garnet on each surface.

An LLC 120 polarization rotator was tested when illuminated by radiant energy at a wave length of 850 nanometers and produced a rotation of 1° per micron at a field density of 203 gauss. In passing through the 21.7 micron layers four (4) times; i.e., initially passing through layers 26 and 27 and then being reflected back through these layers to the analyzer, the vertically polarized incident energy is rotated by 87° so that virtually all of the incident energy passes through analyzer 31. Obviously, by adjusting the thickness of the Faraday rotator layer, for any offset angle a 90° rotation of polarized light or rotations very close to 90° may be easily achieved. Thus, a very small less than one (1) mm thick monolithic optical switch is possible in which all of the functional elements of the Faraday magneto-optic switch are mounted on a single substrate. This makes mounting of the switch in one of the flux return paths readily achievable. Furthermore, it results in a speed sensor which is very small, and very light; all of which are important considerations in aircraft uses where space and weight are usually at a premium.

As will now be apparent, a small, light weight, speed sensor construction has been illustrated in which the rotating member switches the magnetic field associated with the sensor between orthogonal magnetic return paths during each rotation. One of the a magnetic return paths has magneto-optic switches associated therewith which are actuated during each rotation to permit passage of the radiant energy which is then detected remotely is an indication of the speed of the rotation member.

While the instant invention has been described in connection with a preferred embodiment thereof, the invention is by no means limited thereto since many modifications in the instrumentalities employed may be made without departing from the true spirit and scope of the invention.

**Claims**

1. In a speed sensor for measuring the speed of a rotating member the combination comprising:

(a) a source of magnetic flux positioned adjacent to a rotating member having at least one ferrous projection,

(b) first and second orthogonally disposed flux return paths associated with said source of magnetic flux,

(c) magneto-optic switch means positioned in flux-exchange relationship with one of said first and second flux return paths, said switch means having input and output optic fibers associated therewith to control passage of radiant energy through said switch in response to the rotating member, the reluctance of the said one flux return path being greater than the reluctance of the other of said first and second paths whereby said magneto-optic switch means blocks passage of radiant energy,

(d) means for switching the flux between said first and second paths upon passage of a ferrous projection on a rotating member by reducing the reluctance of the said one path thereby actuating the magneto-optic switch means to permit passage of radiant energy each time the ferrous projection passes.

2. The speed sensor according to Claim 1 wherein each of said orthogonally disposed flux return paths comprises a pair of flux return members disposed on either side of and parallel to said source of magnetic flux.

3. The speed sensor according to Claim 2 wherein the distance between source of flux and the flux return members which include the magneto-optic switch means is greater than the distance between the other pair.

4. The speed sensor according to Claim 2 or 3 wherein said ferrous projection passes between said flux source and the flux return members associated with the magneto-optic switch means to reduce the reluctance of the path between said flux source and the member as the flux passes through said projection.

5. The speed sensor according to any preceding Claim wherein said magneto-optic switch means includes at least one device having Faraday rotating means deposited on one surface of a substrate, polarizer and analyzer elements located side-by-side on said one surface of the substrate and radiant energy reflecting means on the other surface whereby the presence of a magnetic field along the axis of sensitivity products rotation of the plane of polarization of the radiant energy to permit passage from the input fiber when the flux is switched between the orthogonal flux return path.

6. The features herein described, or their equivalents, in any patentably novel selection.

5

Fig. 1

Fig. 2